# EUROPEAN PATENT APPLICATION

(11) **EP 1 156 669 A2**
(43) Date of publication of application: **21.11.2001**
(21) Application number: 01109303.6
(22) Date of filing: 11.04.2001
(51) Int. Cl.: H04N 5/00, H04N 7/24

(54) **Receiving system and method for selectively acquiring broadcast data through internet**

(30) Priority: 19.04.2000 JP 2000117366
(71) Applicant: NEC CORPORATION, Tokyo (JP)
(72) Inventor: Nishiura, Sachiko, Minato-ku, Tokyo (JP)
(74) Representative: VOSSIUS & PARTNER

(57) **Abstract**

An object of the present invention is to assemble all modules of a data broadcast via the internet access, when the receiving conditions of radio waves become poor due to, for example, bad weathers. When a reception condition monitoring means 6 determines that the receiving conditions become poor, reception method changing means 7 switches on an internet access means 10. At this time, a module detection means 8 acquires a module list registered in advance in a module memory means 4 to detect a module which has not been received so as to acquire only this module which has not been received by the internet access.

## Description

The present invention relates to a receiving system and the method thereof and a recording medium recording a control program thereof, and particularly to a data broadcast reception method for receiving the data broadcast of a module format.

As a conventional method, with respect to dealing with a case where a reception condition of radio waves becomes deteriorated, there exist a practical use of a hierarchical modulation written in the third volume 7-33 of BS (Broadcasting Satellite) Digital Broadcast Operational Regulation "ARIBTR-B15 Version 1.0." Images or the like highly compressed by a high modulation method is transmitted, by a modulation method with a low utilization efficiency, when the radio wave condition deteriorates. The images are received in a receiver side, by a demodulation method with a low utilization efficiency. In this case, by transmitting the video and voice corresponding to a low hierarchy, even when the reception condition of radio waves deteriorates in the receiver side, the receiver side can receive and display the images and voices, although their quality are not perfect.

One example of a system that reliably receives the digital broadcast, the internet broadcast, or the like at a conventional signal level is disclosed in JP. 11-220665 A (1999). Its structure is referred to and is shown in Fig. 8.

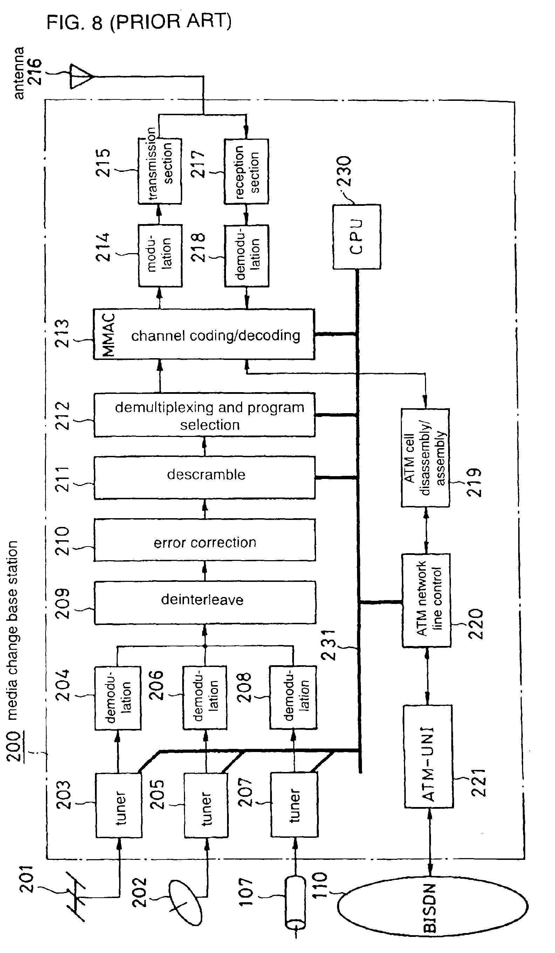

As referred to Fig. 8, ground wave 201, satellite wave 202 and cable wave 107 are received by tuners 203, 205, 207 and demodulators 204, 206, 208. Further, signal from internet 110 is received, for example, by control devices 221, 220, and a cell disassembly/assembly device 219 corresponding to ATM (Asynchronous Transfer Mode). Therefore, users can receive an object broadcast signal without fail.

However, in this conventional technique, there are disadvantage as follows. A first disadvantage is that in bad weather or the like, even when the receiver side changes a modulation method from a high modulation method for performing a high utilization to a low modulation method or minimizing an image size to broadcast it, the receiver can not always display the data broadcast.

The stream based broadcast such as a video or a caption may be received and displayed with lowered qualities. However, data broadcast can not be displayed, because the data broadcast is displayed after assembling the modules. In other word, the situation becomes the same as the case where the module cannot be received, when there is even one bit of noise in the received data.

A second disadvantage is that it takes a long time to acquire the entire broadcast in a general household, because a high speed data access cannot be performed since a television receiver typically employs a general public line.

An object of the present invention is to provide a receiving system and the method thereof and a recording medium recording a control program thereof in which all modules through the data broadcast can be assembled by acquiring data modules through the internet access even at a time when the reception condition of radio waves deteriorates such as at a time of bad weather or the like.

A receiving system according to the present invention is characterized in that switching to the reception by an internet access method is performed in response to deterioration in a reception condition of a data broadcast and is characterized by comprising a broadcast reception means receiving the data broadcast, an internet access means accessing the internet, a monitoring means monitoring the reception condition of the data broadcast, and a control means controlling switching between the broadcast reception means and the internet access means in response to the result of the monitoring.

Further, the system is characterized in that data of the data broadcast and an internet access destination are series of module formats, and the control means controls in such a manner as to acquire by the internet access means only a module which is other than the module that has been received by the data broadcast reception means and which has not been received and is characterized in that the control means comprises a memory means storing in advance a list of a series of module names of the data broadcast and a means comparing a reception module name through the data broadcast means and the list of the series of module names to detect the module which has not been received.

Moreover, the control means is characterized by performing switching control between the broadcast reception means and the internet access means in a case where the reception condition deteriorates, referring to the monitoring result by the monitoring means when the module which has not been received is detected.

A data broadcast reception method of the present invention is characterized in that switching to the reception by an internet access is performed in response to deterioration in a reception condition of a data broadcast and is characterized by comprising a broadcast reception step receiving the data broadcast, a monitoring step monitoring deterioration in the reception condition of the data broadcast, and a control step controlling switching to accessing the internet in response to the deterioration in the reception condition.

Further, the method of the present invention is characterized in that data of the data broadcast and an internet access destination are series of module formats, and the control step controls in such a manner as to acquire by the internet access only the module which is other than a module that has been received by the data broadcast reception and which has not been received and is characterized in that the control step comprises a step comparing a reception module name through the data broadcast and the list of the series of module names stored in advance to detect the module which has not been received.

Moreover, the control step is characterized by performing switching control between the broadcast reception and the internet access in a case where the reception condition deteriorates, referring to the monitoring result by the monitoring step when the module which has not been received is detected.

The computer readable recording medium or computer program product of the present invention stores a program for executing the above-mentioned method for receiving data broadcast.

In short, in a television system of the present invention wherein the digital broadcast is received, a reception condition is monitored, and when the reception condition deteriorates, the reception method of the data broadcast is switched from the broadcast reception to module acquirement by the internet access. Further, in order to access the internet efficiently, the module which cannot be detected in the data broadcast reception is detected, and only the module which is lacked is received by the internet access to be displayed.

When it is determined that the reception condition deteriorates, the reception method is changed and is switched to the reception method by the internet access. At this time, a list of modules registered in advance is acquired so that the module which has not been received is detected, and only this module which has not been received is acquired by the internet access. Thus, the module which has not been received due to a bad broadcast reception condition can be acquired, outputted and displayed by changing the reception method from the broadcast reception to the internet access.

According to the present invention, the module of a data part can be received and displayed, even when noises are always contained in the data broadcast due to poor receiving conditions such as bad weathers. This is because required modules are acquired via the internet employing a line which does not relate to the condition of the broadcast radio waves at all. On the contrary, the entire module cannot be assembled and thus cannot be received and displayed when even one bit of noise exists in the received data in the data broadcast of broadcast radio waves,

Further, according to the present invention, even a public line employed for the internet access in a television receiver in a general household can fully cope with as a supplementary means for displaying the data broadcast. This is because the receiving system of the present invention has only to acquire only non-received modules due to the poor receiving conditions.

Fig. 1 is a block diagram of an embodiment of the present invention.

Fig. 2 is a flow chart showing operations of an embodiment of the present invention.

Fig. 3 is an image diagram of one specific example of a module list employed in a module assembly.

Fig. 4 is an image diagram of one specific example stored in the module memory means 4.

Fig. 5 is an example of programs and an access destination list stored in the access destination memory means 9.

Fig. 6 is an example of module names transmitted to the internet access means 10.

Fig. 7 is another example of modules stored in the module memory means 4.

Fig. 8 is a block diagram of a conventional system for data broadcast.

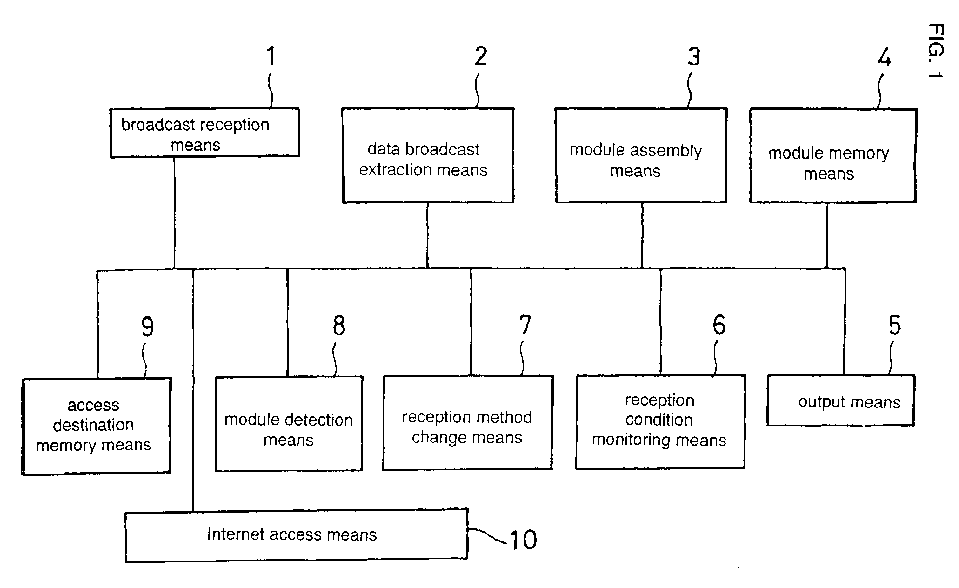

Fig. 1 is a block diagram of one embodiment of a data reception method switching system of the present invention. 1 is a broadcast reception means, 2 is a data broadcast extraction means, 3 is a module assembly means, 4 is a module memory means, 5 is a output means, 6 is a reception condition monitoring means, 7 is a reception method change means, 8 is a module detection means, 9 is an access destination memory means, and 10 is an internet access means.

These respective means operate as follows in brief. The broadcast reception means 1 receives the broadcast. The data broadcast extraction means 2 extracts a data broadcast part from the broadcast received. The module assembly means 3 assembles the extracted data of the data broadcast as a module. The module memory means 4 stores the assembled modules. The output means 5 displays an arbitrary module stored in the module memory means. The reception condition monitoring means 6 monitors a broadcast reception condition and determines a change in the reception method when the reception condition deteriorates.

The reception method change means 7, when receiving the decision of the reception method change, switches into the internet access reception method. The module detection means 8 acquires a list of modules to be assembled from the module assembly means 3 and detects a module which is not stored in the module memory means. The access destination memory means 9 stores an internet access destination for each broadcast program. The internet access means 10 selects an access destination holding a module to be received from the access destination memory means 9 and performs module acquirement of non-received modules detected by the module detection means 8 by the internet. The acquired module is stored in the module memory means 4 and is outputted by the output means 5.

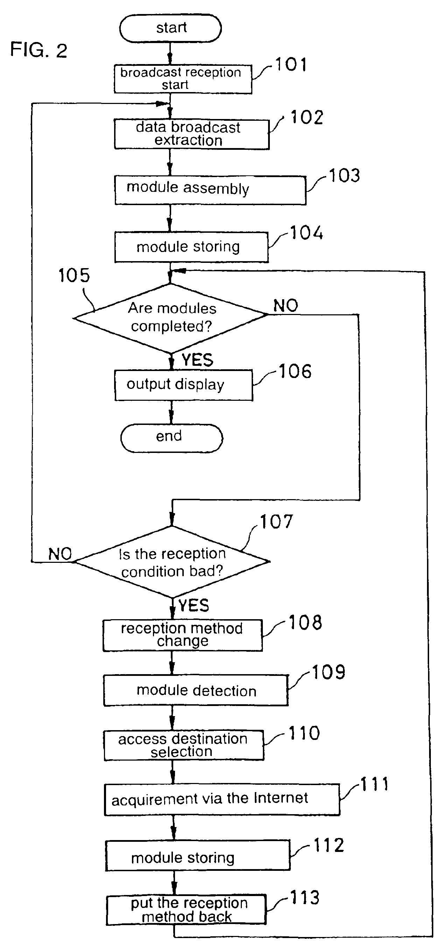

Next, the entire operation of the present embodiment is explained in detail referring to Fig. 1 and a flow chart of Fig. 2. First, the broadcast reception is started by the broadcast reception means 1 (step 101). Then, the part of the data broadcast is extracted from the broadcasts received by the data broadcast extraction means 2 (step 102). The extracted data of the data broadcast are assembled by the module assembly means 3 as a module (step 103) and are stored in the module memory means 4 (step 104). The module detection means 8 checks whether or not the assembling all the modules to be assembled is finished based on a list of information of the module assembly means 3 and lets the output means 5 display the module (step 106) when all the modules are received (step 105).

In the decision of step 105, the reception condition monitoring means 6 determines whether the reception condition is bad or not (step 107) if all the modules are not received, and when the reception condition is not bad, the data broadcast is extracted again from the received broadcast of the step 102 so as to assemble modules. In the decision of step 107, when the reception condition is bad, the reception method change means 7 is informed of a reception method change (step 108). The reception method change means 7 acquires the list of modules to be assembled from the module assembly means 3 through the module detection means 8, checks it against the modules in the module memory means 4, and detects the module which has not been stored yet as a module (step 109).

In order to acquire the detected module through the internet, the internet access means 10 selects a corresponding access destination from the list of access destinations stored in advance in the access destination memory means 9 (step 110) and designates it as a server for module receiving to acquire a necessary module (step 111). The acquired module is stored in the module memory means 4 (step 112), and the reception method is put back from an acquisition method by the internet to a reception by a conventional data broadcast extraction (step 113).

The module detection means 8 checks whether or not all the modules are received (step 105), and when all are received, they are outputted by the output means 5 (step 106). When all are not received according to the determination in step 105, it is determined whether the reception condition of step 107 is bad or not, and when it is not bad, receiving is performed over again through the extraction of the data broadcast. When the reception condition is bad, the reception method is changed to the reception by the internet so as to acquire a module.

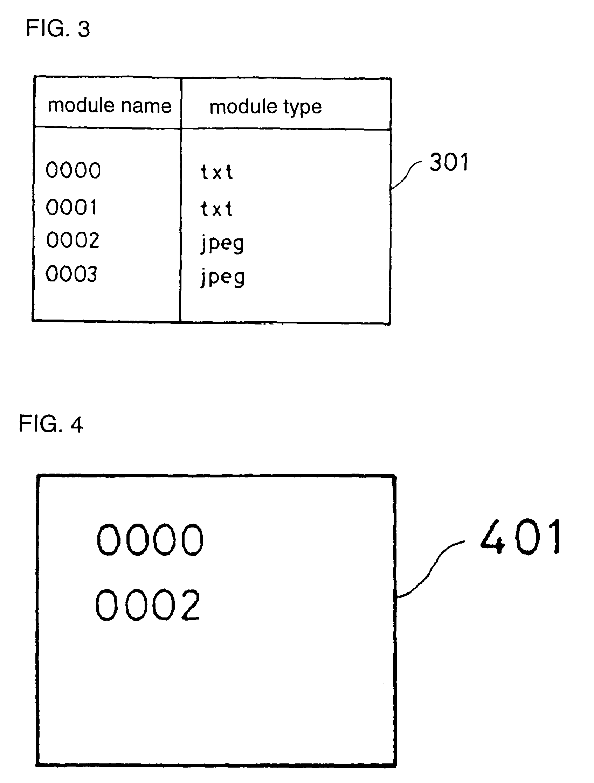

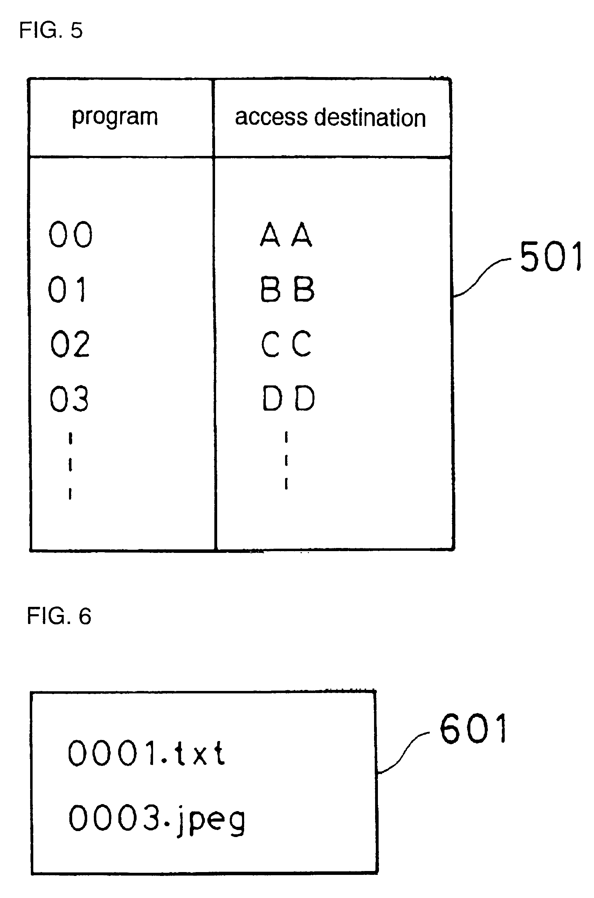

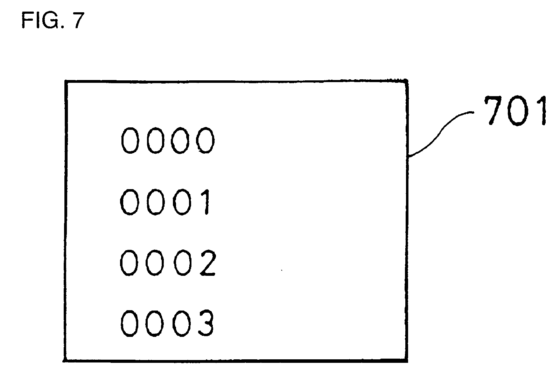

Fig. 3 is an exemplary list of modules employed in a module assembly, Fig. 4 is an image diagram of one specific example stored in the module memory means 4, Fig. 5 is an exemplary list of programs and access destinations stored in the access destination memory means 9, Fig. 6 is an example of a module name transmitted to the internet access means 10, and Fig. 7 is another example of modules stored in the module memory means 4.

Next, the present invention is explained employing the specific examples, referring to Fig. 3 to Fig. 7. Receiving the broadcast of a program number 01 is started (step 101), the data broadcast is extracted by the data broadcast extraction means 2 (step 102), and when the module information in the data to be assembled is four modules of the module name 0000 and the module type txt (Text), the module name 0001 and the module type txt, the module name 0002 and the module type jpeg (Joint Photographic Experts Group), and the module name 0003 and the module type jpeg, the module assembly means 3 manages it as a list 301 of Fig. 3 so as to perform a module assembly process (step 103).

When the assembled modules are the two, the module name 0000 and the module name 0002, the two modules are stored in the module memory means 4 (step 104). The contents of module memory means 4 are shown in Fig. 4. The module detection means 8 determines whether or not the modules of step 105 are all received. Then, the module detection means check the module names of the list that the module assembly means 3 holds against the module names in the module memory means.

In this case, since all are not received, the step proceeds to the decision as to whether the reception condition is bad or not (step 107), and when the reception condition is not bad according to the reception condition monitoring means 6, the data broadcast is extracted over again (step 102) to proceed to the assembly of a module (step 103). Here, it is supposed that the reception condition is bad due to a weather condition such as a rainstorm and that the reception condition monitoring means 6 determines that the reception condition is bad. The reception condition monitoring means 6 instructs the reception method change means 7 on the reception method change (step 108). The reception method change means 7 receives the instruction on the reception change and lets the module detection means 8 detect which module has not been received. The module detection means 8 detects the module other than the modules stored in the module memory means 4 based on the module name list 301 that the module assembly means holds.

In the case of this example, since the module names 0001 and 0003 are not stored as modules, names "0001.txt" and "0003.jpeg" obtained by relating two module names shown in Fig. 6 (601) to the module types are detected and are transmitted to the internet access means 10 (step 109). The internet access means 10 selects an access destination through the access destination memory means 9. In this example, since the program number 01 is received, BB that is the access destination of the program 01 is selected from a program 501 stored in advance shown in Fig. 5 and the access destination list (step 110).

The internet access means 10 links BB being an access destination and 0001.txt and 0003.jpeg, acquires the module 0001 and the module 0003 by a protocol such as http (Hyper Text Transmission Protocol) or ftp (File Transmission Protocol) (step 111), and lets the module memory means 4 store them (step 112). Here, it is supposed that both 0001 and 0003 are received, and thus the content of the module memory means 4 are four modules, 0000, 0001, 0002, and 0003 stored as shown in an image 701 of Fig. 7.

After the process to store the acquired modules is finished, the reception method change means 7 puts the reception method employing the internet back to the conventional reception method in which the broadcast is received so that the data broadcast part is extracted (step 113), and the module detection means 8 proceeds to the decision as to whether all modules are received (step 105). Here, since the module list 301 that the module assembly means 3 holds corresponds to the module name 701 in the module memory means, it is determined that all modules are received, and the modules are outputted by the output means 5.

The data broadcast is a series of module formats as shown in the list 301 shown in Fig. 3, and it is supposed that these types of formats are repeatedly broadcasted. It is clear that the blocks shown in Fig. 1 may be a hardware structure and also can be realized under the control of a computer such as a CPU by a software or a program stored in advance in a computer readable recording medium.

## Claims

1. A receiving system for acquiring broadcast data through an internet, which comprises:
broadcast reception means for receiving said broadcast data;
internet access means for accessing said internet;
monitoring means for monitoring conditions of said receiving; and
control means for switching off said broadcast reception means and switching on said internet access means, when said conditions deteriorate.

2. The receiving system according to claim 1, wherein said internet access means acquires only non-received modules which have not been received yet by said broadcast reception means.

3. The receiving system according to claim 1 or 2, wherein said control means comprises:
memory means for storing in advance a list of names of said modules of said broadcast; and
comparison means for comparing names of modules already received by said broadcast reception means with said list and detecting said non-received modules,
wherein said control means switches off said broadcast reception means and switches on said internet access means, when said non-received modules are detected.

4. A receiving method for acquiring broadcast data through an internet, which comprises the steps of
receiving said broadcast data;
monitoring conditions of said receiving;
stopping said receiving, when conditions of said receiving deteriorate;
accessing said internet; and
acquiring through said internet said broadcast data which has not received yet.

5. The receiving method according to claim 4, wherein said broadcast data acquired through said internet is an only non-received module which has not been received yet.

6. The receiving method according to claim 4 or 5, wherein said stopping step further comprises the steps of:
storing in advance a list of names of said modules of said broadcast; and
comparing names of modules already received with said list and detecting said non-received modules.

7. A computer program product for acquiring broadcast data through an internet, which stores a program for executing the steps of:
receiving said broadcast data;
monitoring conditions of said receiving;
stopping said receiving, when conditions of said receiving deteriorate;
accessing said internet; and
acquiring through said internet said broadcast data which has not received yet.

8. The computer program product according to claim 7, wherein said broadcast data acquired through said internet is an only non-received module which has not been received yet.

9. The computer program product according to claim 6 or 7, wherein said stopping step further comprises the steps of
storing in advance a list of names of said modules of said broadcast; and
comparing names of modules already received with said list and detecting said non-received modules.
